# NOUVEAU FASCICULE DE BREVET EUROPEEN

(11) **EP 3 157 730 B2**
(45) Date de publication et mention de la décision concernant l'opposition: **21.05.2025**
(45) Mention de la délivrance du brevet: 01.08.2018
(21) Numéro de dépôt: 15733824.5
(22) Date de dépôt: 12.06.2015
(51) Int. Cl.: B29C 49/64

(54) **DISPOSITIF DE CHAUFFAGE COMPORTANT UNE LAMPE MONTÉE DE MANIÈRE AMOVIBLE SUR UN RÉFLECTEUR ASSOCIÉ**
HEIZVORRICHTUNG UMFASSEND EINE HERAUSNEHMBAR AUF EINEM REFLEKTOR MONTIERTE LAMPE
HEATING DEVICE COMPRISE A LAMP REMOVABLY MOUNTED ON A REFLECTOR

(30) Priorité: 18.06.2014 FR 1455595
(43) Date de publication de la demande: 26.04.2017
(73) Titulaire: Sidel Participations, 76930 Octeville-sur-Mer (FR)
(72) Inventeur: HEUZEBROC, Pierre, F-76930 Octeville-sur-Mer (FR); MORISSE, Jean-François, F-76930 Octeville-sur-Mer (FR)
(74) Mandataire: Gevers & Orès
(86) Numéro de dépôt international: PCT/FR2015/051565
(87) Numéro de publication internationale: WO 2015/193591

(56) Documents cités:
- EP-A1- 2 110 225
- WO-A1-01/62463
- WO-A1-2015/000875
- DE-A1- 102009 033 902
- DE-A1- 3 608 394
- DE-A1- 3 904 138
- DE-U1- 202005 020 252
- DE-U1- 29 721 183
- DE-U1- 29 810 061
- JP-A- 2001 068 066
- US-A- 5 549 468
- US-A- 6 005 223
- US-A1- 2006 279 951
- US-B2- 7 465 063
- Dictionnaire "LE NOUVEAU PETIT ROBERT, adjectif"déterminé, ée". page 727, 2002

## Description

### DOMAINE TECHNIQUE DE L'INVENTION

L'invention concerne un dispositif de chauffage, notamment pour chauffer des préformes en matériau thermoplastique, comportant une lampe et un réflecteur qui est assemblé avec la lampe.

### ARRIERE PLAN TECHNIQUE DE L'INVENTION

L'invention concerne plus particulièrement un dispositif de chauffage, notamment pour chauffer des préformes en matériau thermoplastique, selon le préambule de la revendication 1.

Il est connu de fabriquer des récipients en matériau thermoplastique par formage de préformes, par exemple par soufflage ou par étirage-soufflage. Pour réaliser l'opération de formage, il est nécessaire de chauffer préalablement le corps des préformes à une température de transition vitreuse afin de le rendre malléable. Les installations de fabrication en série de récipients comportent à cet effet des stations de chauffage des préformes.

Une station de chauffage présente généralement la forme d'un tunnel dans lequel au moins l'une des parois est formée par un assemblage de plusieurs modules de chauffage équipé de dispositifs de chauffage du type décrit précédemment. Les préformes défilent le long du tunnel devant les modules de chauffage en tournant sur elles-mêmes afin que leur corps soit chauffé de manière uniforme à une température adaptées pour l'opération de formage.

Les lampes utilisées pour le chauffage des préformes sont généralement des lampes de type halogène qui émettent un rayonnement électromagnétique chauffant, par exemple un rayonnement infrarouge. Elles comportent une ampoule dont une partie tubulaire renferme un filament qui s'étend longitudinalement entre deux culots. Chaque culot permet l'alimentation en électricité du filament. Lorsqu'il est alimenté avec la puissance électrique adéquate, le filament émet le rayonnement chauffant radialement dans toutes les directions.

Une telle lampe en forme de tube diffuse le rayonnement électromagnétique chauffant dans toutes les directions. Ainsi, une partie du rayonnement n'est pas orienté vers la préforme. Il en résulte que pour chauffer une préforme, une partie de l'énergie électrique est consommée par la lampe en pure perte.

Pour permettre une économie substantielle d'énergie, il est connu d'agencer un réflecteur à proximité de l'ampoule tubulaire pour renvoyer le rayonnement lumineux vers la préforme. Un tel réflecteur est réalisé en un matériau résistant à la chaleur élevée produite par la lampe, par exemple en céramique.

Actuellement, les réflecteurs sont fixés de manière définitive avec la lampe. Il en résulte qu'en cas de défaillance de la lampe, l'ensemble du dispositif de chauffage formé par la lampe et le réflecteur doit être remplacé.

Le document DE202005020252 décrit une fixation amovible entre réflecteur et lampe.

### BREF RESUME DE L'INVENTION

L'invention propose un dispositif de chauffage selon la revendication 1. Un tel dispositif de chauffage permet très avantageusement de conserver le réflecteur pour l'assembler avec une lampe de rechange en cas de défaillance de la première lampe. Une telle solution permet d'économiser le rachat d'un nouveau réflecteur, tout en évitant une production inutile de déchets.

Selon d'autres caractéristiques du dispositif de chauffage réalisé selon les enseignements de l'invention :
- chaque organe de maintien comporte une fente ouverte transversalement vers l'avant qui est destinée à recevoir par emboîtement transversal la partie complémentaire du tronçon d'extrémité libre de la lampe pour maintenir la lampe en position par rapport au réflecteur ;
- le dispositif de chauffage comporte une butée d'arrêt de la lampe à la distance transversale déterminée du réflecteur ;
- la fente est délimitée par deux doigts élastiquement déformables entre lesquels la partie complémentaire du tronçon d'extrémité de la lampe est reçue avec un jeu vertical de maintien de la lampe en position emboîtée ;
- chaque organe de maintien est formé par une pièce indépendante qui est fixée au réflecteur, notamment par soudage ;
- chaque organe de maintien est réalisé venu de matière avec un élément de support du réflecteur ;
- la partie à emboîter du tronçon d'extrémité de la lampe est formée par le pincement ;
- la partie à emboîter du tronçon d'extrémité de la lampe est formée par le culot ;
- chaque tronçon d'extrémité de la lampe est destiné à être reçu coulissant transversalement avec jeu vertical dans une rainure associée d'un module de chauffage, le dispositif comportant au moins un organe de stabilisation pour empêcher la rotation du dispositif de chauffage autour d'un axe longitudinal par rapport à ladite rainure par contact avec une face de la rainure ;
- l'organe de stabilisation comporte une patte de contact avec une face supérieure de la rainure ;
- l'organe de stabilisation est formé par un élément indépendant qui est fixé avec l'organe de maintien, par exemple par soudage ;
- l'élément indépendant comportant l'organe de maintien est muni de la butée d'arrêt de la lampe.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente un module de chauffage équipé d'une pluralité de dispositif de chauffage réalisés selon les enseignements de l'invention, l'un des dispositifs de chauffage étant représenté démonté ;
- la figure 2 est une vue en perspective éclatée qui représente un dispositif de chauffage avant emboîtement de la lampe avec le réflecteur associé ;
- la figure 3 est une vue en coupe selon le plan de soupe 3-3 de la figure 1 qui représente une lampe emboîtée avec son réflecteur ;
- la figure 4 est une vue en coupe selon le plan de coupe 4-4 de la figure 1 qui représente un râtelier de support des dispositifs de chauffage ;
- la figure 5 est une vue de détail à plus grande échelle d'un dispositif de chauffage de la figure 1 qui représente un tronçon d'extrémité du dispositif de chauffage lorsque la lampe est emboîtée avec le réflecteur ;
- la figure 6 est une vue en coupe transversale selon le plan de coupe 6-6 de la figure 5 qui représente l'organe de maintien de la lampe emboîté avec un pincement de la lampe ;
- la figure 7 est une vue éclatée du réflecteur de la figure 5 qui représente l'organe de maintien de la lampe et l'organe de stabilisation du dispositif de chauffage ;
- la figure 8 est une vue similaire à celle de la figure 5 qui représente une variante de réalisation de l'invention dans laquelle la lampe est maintenue sur le réflecteur par emboîtement du culot avec l'organe de maintien ;
- la figure 9 est une vue de détail qui représente l'organe de maintien de la figure 8.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative des orientations longitudinale, verticale et transversale indiquées par le trièdre "L,V,T" des figures. La direction transversale est ici dirigée d'arrière en avant.

Dans la suite de la description, on utilisera le terme "intérieur" pour définir une face tournée longitudinalement en direction de l'ampoule 18 et le terme "extérieur" pour définir une face tournée dans le sens opposé.

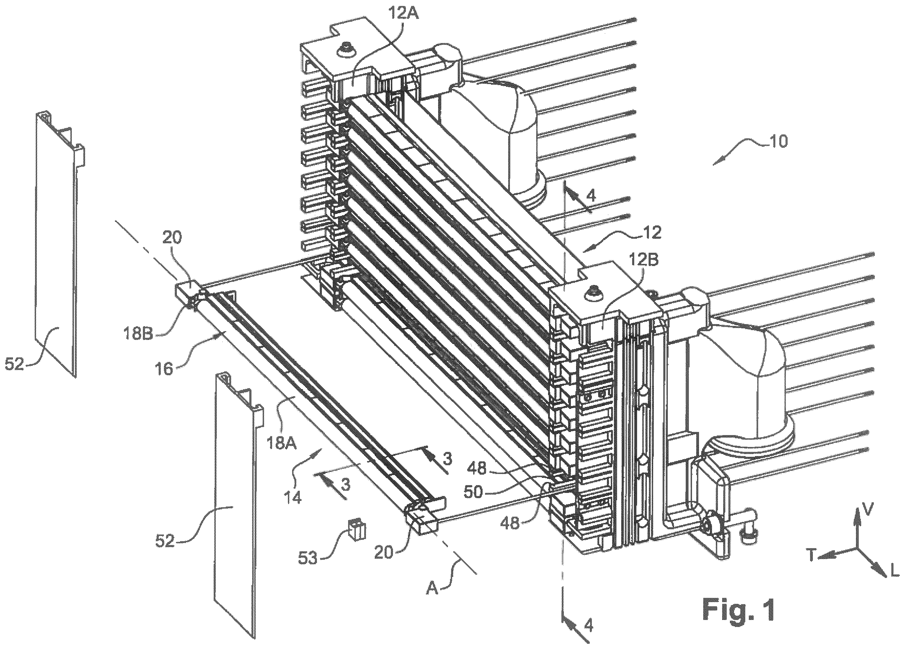

On a représenté à la figure 1 un module 10 de chauffage qui est destiné à équiper une station (non représentée) de chauffage de préformes. Selon l'invention, le module 10 de chauffage comporte un râtelier 12 de support de plusieurs dispositifs 14 de chauffage identiques.

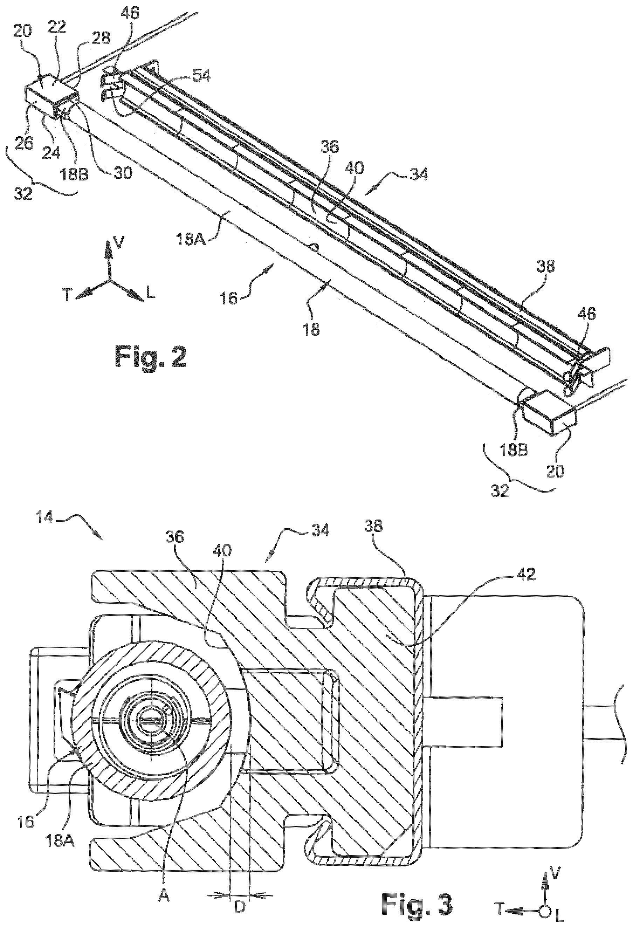

Comme représenté à la figure 2, chaque dispositif 14 de chauffage comporte une lampe 16. La lampe 16 comporte une ampoule 18 tubulaire d'axe "A" longitudinale. Selon l'invention, l'ampoule 18 comporte un tronçon 18A central tubulaire creux qui est fermée hermétiquement à ses deux extrémités longitudinales par deux pincements 18B. Les deux pincements 18B sont aplatis dans un plan longitudinal transversal.

Le tronçon 18A tubulaire creux renferme des moyens (non représentés) d'émission d'un rayonnement électromagnétique apte à chauffer le matériau thermoplastique constituant la préforme, par exemple un rayonnement infrarouge. Il s'agit par exemple d'un filament longitudinal qui s'étend entre les deux pincements 18B et qui baigne dans une atmosphère adaptée à l'émission du rayonnement chauffant. S'agissant d'une lampe de type halogène, l'atmosphère contient un gaz halogène.

L'ampoule 18 est réalisée en un matériau transparent et résistant au chauffage, par exemple en verre de quartz.

La lampe 16 comporte aussi deux culots 20 dont chacun est fixé à un pincement 18B associé. Chaque culot 20 présente une enveloppe parallélépipédique qui comporte une face 22 horizontale supérieure, une face 24 horizontale inférieure, une face 26 verticale longitudinale avant, une face 28 verticale longitudinale arrière. Chaque culot 20 comporte aussi une face 30 verticale transversale, dite face 30 intérieure, qui est tournée vers l'ampoule 18 et qui comporte un orifice de passage pour l'extrémité libre du pincement 18B associé.

Chaque culot 20 renferme des moyens (non représentés) pour commander l'alimentation en électricité du filament. Chaque culot 20 est fixé de manière non démontable sur le pincement 18B associé de l'ampoule 18, par exemple au moyen de ciment.

Ainsi, la lampe 16 comporte deux tronçons 32 d'extrémité libre dont chacun comporte un pincement 18B d'extrémité de l'ampoule et le culot 20 fixé audit pincement 18B.

Chaque dispositif 14 de chauffage comporte aussi un réflecteur 34 longitudinal qui est agencé transversalement en vis-à-vis d'une face arrière du tronçon 18A tubulaire de l'ampoule 18. Comme représenté à la figure 3, lorsqu'il est assemblé avec la lampe 16, le réflecteur 34 est agencé à une distance "D" transversale déterminée du tronçon 18A tubulaire.

Le réflecteur 34 est ici formé d'une pluralité de blocs 36 similaires qui sont portés par un élément de support formé par une glissière 38 longitudinal de support. Chaque bloc 36 présente une face 40 cylindrique concave avant de réflexion du rayonnement électromagnétique qui loge le tronçon 18A tubulaire de l'ampoule 18. Chaque bloc 36 comporte en outre une portion arrière formant un coulisseau 42 qui est reçu en coulissement longitudinal dans la glissière 38.

La glissière 38 est ici réalisée par profilage d'une tôle métallique qui présente en coupe transversale une forme de "C" ouvert transversalement vers l'avant.

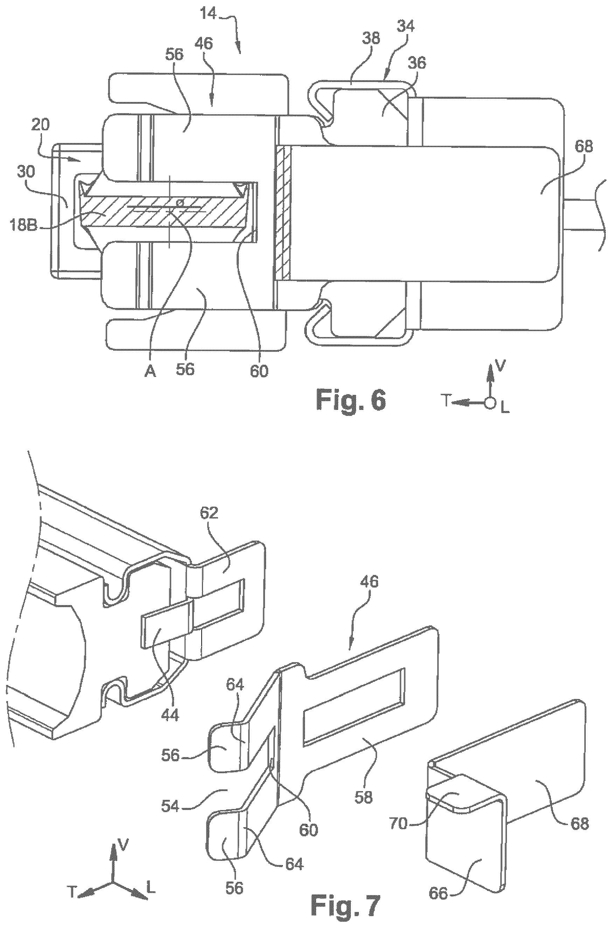

Les blocs 36 sont enfilés en rang longitudinalement dans la glissière 38 de manière que leurs faces 40 avant forme une unique face de réflexion de même longueur que le tronçon 18A tubulaire de l'ampoule 18. Comme cela est représenté à la figure 7, les blocs 36 sont immobilisés longitudinalement par deux ergots 44 transversaux de retenue dont chacune s'étend transversalement vers l'avant en travers de la glissière 38.

La glissière 38 est par exemple réalisée en acier inoxydable tandis que les blocs 36 sont réalisés en céramique. Chaque ergot 44 de retenue est ici formé venue de matière avec la glissière 38, par exemple par coupage et par pliage.

Le dispositif 14 de chauffage est destiné à être formé par l'assemblage de la lampe 16 avec le réflecteur 34 pour former un ensemble solidaire. A cet effet, deux organes 46 de maintien en position transversale de la lampe 16 par rapport au réflecteur 34 sont chacun fixés à une extrémité longitudinale associée du réflecteur 34. Ces organes 46 de maintien permettent de positionner correctement la face 40 de réflexion du réflecteur 34 à la distance "D" déterminée du tronçon 18A tubulaire de l'ampoule 18.

De plus, ces organes 46 de maintien permettent de maintenir longitudinalement la lampe 16 en position par rapport au réflecteur 34 de manière que la face 40 de réflexion soit en vis-à-vis de la totalité du tronçon 18A tubulaire de l'ampoule 18.

Les organes 46 de maintien seront décrits plus en détails par la suite.

Les dispositifs 14 de chauffage ainsi assemblés sont agencés dans le râtelier 12 de support les uns au-dessus des autres, comme cela est représenté à la figure 1. A cet effet, le râtelier 12 comporte deux colonnes 12A, 12B agencées longitudinalement de part et d'autre de l'espace destiné à recevoir les tronçons 18A tubulaires des lampes 16.

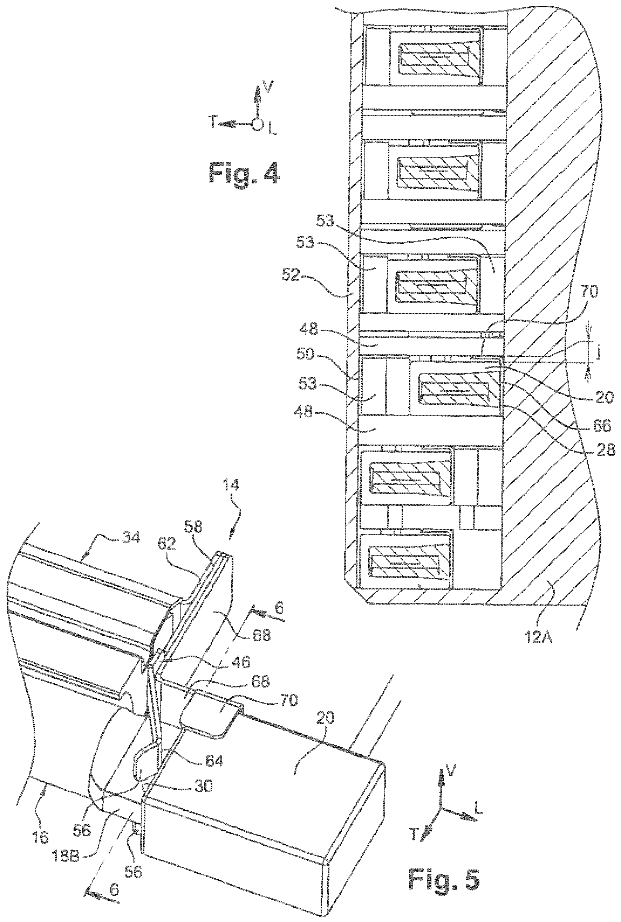

Comme illustré plus en détail à la figure 4, chaque colonne 12A, 12B présente une forme de râteau muni de dents 48 transversales s'étendant vers l'avant depuis la colonne 12A, 12B associée. Deux dents 48 adjacentes délimitent verticalement une rainure 50 transversale ouverte vers l'avant qui est destinée à recevoir un culot 20 associé d'une lampe 16 en coulissement transversal. Chaque culot 20 est reçu avec un jeu "j" vertical dans la rainure 50 associée. Chaque râteau 12A, 12B présente une largeur longitudinale inférieure à la longueur longitudinale d'un culot 20.

Chaque dispositif 16 de chauffage est ainsi porté par une dent 48 inférieure de la rainure 50. Les dispositifs 16 de chauffage sont ensuite emprisonnés transversalement dans leurs rainures 50 par deux capots 52 verticaux transversaux qui sont fixés chacun contre une colonne 12A, 12B pour fermer les rainures 50 transversalement vers l'avant.

Chaque rainure 50 présente en outre une profondeur transversale supérieure à la largeur transversale d'un culot 20 pour permettre d'ajuster la position transversale de chaque dispositif 16 de chauffage par rapport aux préformes. A cet effet, les dispositifs 16 de chauffage sont immobilisés transversalement par des cales 53 qui sont intercalés entre le culot 20 et le fond de la rainure 50 et/ou le capot 52.

Il arrive qu'une lampe 16 tombe en panne, par exemple à cause d'un "claquage" du filament. Il est alors nécessaire de remplacer cette lampe 16. Pour permettre de conserver le réflecteur 34 en remplaçant uniquement la lampe 16, la lampe 16 est assemblée avec réflecteur 34 de manière amovible. Le démontage de la lampe 16 ne nécessite pas d'ôter les culots 20 de la lampe 16.

Selon les enseignements de l'invention, chaque tronçon 32 d'extrémité libre de la lampe 16 préalablement équipé de son culot 20 est monté sur chaque organe 46 de maintien par emboîtement réversible d'une partie du tronçon 32 d'extrémité libre de la lampe 16 avec un logement 54 de forme complémentaire selon une direction orthogonale à la direction longitudinale "L".

Selon un premier mode de réalisation de l'invention qui est représenté aux figures 5 à 7, la lampe 16 est montée sur chaque organe 46 de maintien par emboîtement réversible des pincements 18B avec une fente 54 de support de chaque organe 46 de maintien selon une direction transversale, d'avant en arrière.

Les deux organes 46 de maintien étant identiques, un seul d'entre eux sera décrit par la suite, la description étant applicable par symétrie à l'autre organe de maintien.

Comme illustré à la figure 7, l'organe 46 de maintien présente un doigt 56 supérieur et un doigt 56 inférieur parallèles qui s'étendent transversalement vers l'avant depuis une base 58 arrière. Les deux doigts 56 s'étendent dans un même plan vertical. Les doigts 56 délimitent verticalement la fente 54. La fente 54 est ainsi ouverte transversalement vers l'avant, tandis qu'elle est délimitée transversalement vers l'arrière par un fond 60 formé par un bord vertical de la base 58.

La base 58 et les doigts 56 sont formés venus de matière, par exemple par découpage et pliage d'une tôle métallique verticale transversale.

La base 58 arrière forme une plaque qui s'étend dans un plan transversal vertical. L'organe 46 de maintien est destiné à être fixé sur le réflecteur 34 par soudage de la base 58 contre une patte 62 verticale de support qui s'étend transversalement vers l'arrière depuis un bord d'extrémité longitudinale de la glissière 38. Lorsque l'organe 46 de maintien est fixé au réflecteur 34, les doigts font saillie transversalement vers l'avant par rapport à la face 40 de réflexion des blocs 36 de manière à permettre l'emboîtement des pincements 18B.

Ainsi, dans ce mode de réalisation de l'invention, chaque organe 46 de maintien est formé par une pièce indépendante qui est fixée au réflecteur, notamment par soudage.

En variante non représentée de l'invention, chaque organe de maintien est réalisé venu de matière avec un composant du réflecteur.

Dans le mode de réalisation représenté aux figures, la glissière 38, les ergots 44 de retenue et les pattes 62 de support sont réalisés venus de matière. Par exemple les pattes 62 de support sont réalisées par pliage des extrémités longitudinales de la tôle formant une paroi arrière de la glissière 38. Les ergots 44 de retenue sont réalisés par découpage et par pliage d'une portion centrale des pattes 62 de support de l'autre sens.

Les doigts 56 de l'organe 46 de maintien sont avantageusement déformables élastiquement en flexion horizontale et la fente 54 est dimensionnée pour recevoir le pincement 18B de l'ampoule 18 avec un jeu vertical de maintien assez large pour permettre le coulissement du pincement 18B dans la fente 54, mais suffisamment faible pour que le pincement 18B soit maintenu en position par coincement contre les bords de la fente 54 lorsque la lampe 16 est laissée libre dans la fente 54. En d'autres termes, le jeu de maintien permet un pivotement imperceptible de la lampe 16 autour de son axe longitudinal de sorte que le pincement 18B soit en contact simultané avec les deux bords opposés de la fente 54, provoquant ainsi un blocage transversal de la lampe 16 dans la fente 54. Le démontage de la lampe 16 par déboîtement impose à l'opérateur en charge d'orienter les pincements 18B dans un plan transversal en faisant légèrement pivoter la lampe 16 autour de son axe longitudinal pour que le pincement 18B ne soit plus coincé par les bords de la fente 54.

Lorsque la lampe 16 est ainsi emboîtée avec l'organe 46 de maintien, elle est maintenue en position par rapport au réflecteur 34 :
- transversalement par coincement du pincement 18B entre les doigts 56 ;
- et verticalement par contact avec les doigts 56.

En outre, comme représenté à la figure 5, les doigts 56 sont recourbés de manière à présenter un coude 64 qui fait saillie vers l'extérieur en direction de la face 30 intérieure du culot 20 associé. Les coudes 64 des deux organes 46 opposés de maintien sont destinés à venir en contact avec leur culot 20 associé pour centrer longitudinalement la lampe 16 par rapport au réflecteur 34 par flexion élastique des doigts 56.

Une butée 66 est aussi agencé sur l'organe 46 de maintien pour arrêter le coulissement de la lampe 16 dans la fente 54 à la distance "D" transversale déterminée du réflecteur 34.

La butée 66 est ici formée par la face avant d'une aile verticale qui s'étend longitudinalement en saillie vers l'extérieur depuis la base 58 de l'organe 46 de maintien. Cette butée 66 est destinée à venir en contact avec la face 28 arrière du culot 20 associé lorsque le pincement 18B de la lampe 16 est inséré dans la fente 54 de l'organe 46 de maintien.

Dans l'exemple représenté aux figures 5 à 7, la butée 66 est formée par un élément indépendant qui est fixé, par exemple par soudage, contre la base 58 de l'organe 46 de maintien. A cet effet, une aile 68 verticale de fixation s'étend transversalement vers l'arrière depuis un bord interne de la butée 66. L'aile 68 et la butée 66 sont avantageusement réalisés venu de matière par pliage d'une tôle métallique, formant ainsi une équerre.

Comme représenté à la figure 6, le fond 60 de la fente 54 de l'organe 46 de maintien est agencé transversalement à distance du pincement 18B de la butée 66 lorsque le culot 20 est en appui contre la butée 66 de manière que le pincement 18B de la lampe 16 ne vienne pas en butée contre le fond 60. Ceci permet d'éviter que le pincement 18B ne soit coincé au fond 60 de la fente 54, notamment lorsque le pincement 18B est particulièrement épais du fait des tolérances de fabrication de l'ampoule 18.

En variante non représentée de l'invention, le fond de la fente forme la butée de positionnement transversal de la lampe par rapport au réflecteur.

Par ailleurs, comme cela est illustré à la figure 4, lorsque le dispositif 14 de chauffage est agencé dans le râtelier 12, il est supporté uniquement par appui vertical des culots 20 sur les dents 48 inférieures. Or, le réflecteur 34 fixé de manière démontable sur la lampe 16 déplace le centre de gravité du dispositif 14 de chauffage transversalement vers l'arrière par rapport aux culots 20. Les culots 20 étant reçus avec un jeu "j" vertical dans les rainures 50, le dispositif 14 de chauffage a tendance à basculer vers l'arrière autour d'un axe longitudinal. Pour éviter ce basculement, le dispositif 14 de chauffage comporte au moins un organe 70 de stabilisation pour empêcher le basculement du dispositif 14 de chauffage par rapport au râtelier 12 du module 10 de chauffage.

L'organe 70 de stabilisation est ici formé par une patte horizontale qui s'étend transversalement vers l'avant depuis un bord supérieur de la butée 66. L'organe 70 de stabilisation s'étend ainsi au-dessus de la face 22 supérieure du culot 20 associé à une distance verticale suffisante pour diminuer sensiblement le jeu vertical du culot 20 dans la rainure 50. Il demeure néanmoins un jeu vertical de fonctionnement suffisant pour autoriser le coulissement du dispositif 14 de chauffage dans la rainure 50 associée.

L'organe 70 de stabilisation forme ainsi une patte de contact avec la dent 48 qui délimite supérieurement la rainure 50 pour empêcher le basculement vers l'arrière du dispositif 14 de chauffage.

L'organe 70 de stabilisation est ici réalisé venu de matière avec la butée 66, par exemple par pliage d'une tôle métallique.

Lors de la fabrication du réflecteur 34, les blocs 36 sont tout d'abord enfilés longitudinalement dans la glissière 38 par l'intermédiaire de leur coulisseau 42. Puis les ergots 44 de retenue sont rabattus par pliage en travers des ouvertures d'extrémité longitudinale pour emprisonner les blocs 36.

Ensuite, l'organe 46 de maintien est fixé, par exemple par soudage, contre les pattes 62 de support préalablement rabattue vers l'arrière par pliage.

L'élément indépendant portant la butée 66 et l'organe 70 de stabilisation est fixé, par exemple par soudage, contre la base 58 de l'organe 46 de maintien, avant, pendant ou après la fixation de l'organe 46 de maintien sur le réflecteur 34.

Le réflecteur 34, l'organe 46 de maintien, la butée 66 et l'organe 70 de stabilisation forment ainsi un ensemble solidaire indémontable.

La lampe 16 est ensuite mise en position sur le réflecteur 34. On comprendra que la lampe 16 est considérée comme un tout monté préalablement à son assemblage avec le réflecteur 34. Les différents composants de la lampe 16, notamment les culots 20, ont été montés, et ici définitivement fixés sur l'ampoule 18, avant la mise en position de la lampe 16 sur le réflecteur 34.

La lampe 16 est agencée transversalement en avant du réflecteur 34 de manière que les pincements 18B soient en coïncidence avec l'ouverture avant des fentes 54 des organes 46 de maintien. Puis, la lampe 16 est déplacée transversalement vers l'arrière de manière que les pincements 18B soient emboîtés dans les fentes 54 correspondantes. Le déplacement continue jusqu'à ce que la face 28 arrière des culots 20 soit en contact contre leur butée 66 associée.

La lampe 16 est ainsi positionnée pour former, avec le réflecteur 34, un ensemble solidaire mais démontable formant le dispositif 14 de chauffage. En d'autres termes, la lampe 16 est immobilisée par rapport au réflecteur 34. La lampe 16 est maintenue en position par rapport au réflecteur 34 par coincement entre les doigts 56. Ceci permet d'éviter que le dispositif 14 de chauffage ne se déboîte avant ou pendant son insertion dans le râtelier 12.

Le dispositif 14 de chauffage formant ainsi un ensemble solidaire est ensuite inséré transversalement dans les rainures 50 correspondantes du râtelier 12, avec éventuellement les cales 53 adaptées. L'organe 70 de stabilisation est alors en contact avec la dent 48 supérieure pour empêcher le basculement vers l'arrière du dispositif 14 de chauffage.

En cas de défectuosité de la lampe 16, il suffit de désolidarisée du réflecteur 34 en tirant sur la lampe 16 pour déboîter les pincements 18B des organes 46 de maintien. Le déboîtement de la lampe 16 est effectué manuellement par un opérateur. Grâce aux fentes 54, le démontage de la lampe 16 ne nécessite pas de séparer les culots 20 de l'ampoule 18.

Cette opération est avantageusement réalisée en laissant le réflecteur 34 en place dans le râtelier 12.

En variante, la totalité du dispositif 14 de chauffage est extrait du râtelier 12 avant de procéder au démontage de la lampe 16.

Une nouvelle lampe 16 identique à la précédente peut alors être mise en position sur le réflecteur 34 selon le procédé précédemment décrit.

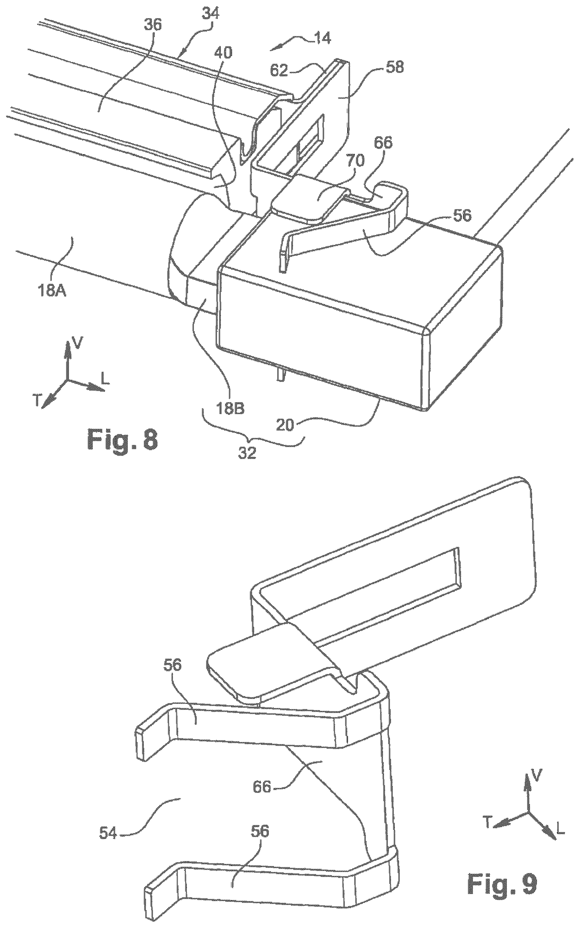

Selon un deuxième mode de réalisation de l'invention qui est représenté aux figures 8 et 9, la partie à emboîter du tronçon 32 d'extrémité de la lampe est formée non plus par le pincement 18B mais par le culot 20.

En ce cas, les doigts 56 et la fente 54 sont agencés longitudinalement du côté externe de l'aile portant la butée 66. Ceci permet avantageusement de réaliser l'organe 46 de maintien, la butée 66, l'organe 70 de stabilisation et la base 58 en une seule pièce, par exemple par découpage et pliage d'une tôle métallique.

L'aile portant la butée 66 s'étend alors longitudinalement depuis la base 58 de l'organe 46 de maintien pour former une équerre.

Une telle conception permet d'obtenir les mêmes fonctions que celle du premier mode de réalisation. L'emboîtement démontable est toujours réalisé selon une direction transversale.

On remarquera néanmoins que les doigts 56 occupent un encombrement vertical plus important que dans le premier mode de réalisation.

Le dispositif 14 de chauffage réalisé selon les enseignements de l'invention permet avantageusement de réutiliser le réflecteur 34 avec plusieurs lampes 16. Ceci est d'autant plus avantageux que le réflecteur s'use considérablement moins vite qu'une lampe 16.

## Revendications

1. Dispositif (14) de chauffage, notamment pour chauffer des préformes en matériau thermoplastique, formant un ensemble solidaire destiné à être agencé dans un râtelier (12) de support de plusieurs dispositifs (14) de chauffage identiques d'un module (10) de chauffage, le dispositif (14) de chauffage comportant :
- une seule lampe (16) comportant une ampoule (18) tubulaire d'axe (A) longitudinal, la lampe (16) comportant un tronçon (18A) central tubulaire creux de l'ampoule (18) et deux tronçons (32) d'extrémité libre dont chacun comporte un pincement (18B) d'extrémité de l'ampoule (18) et un culot (20) d'extrémité qui est fixé au pincement, le tronçon (18A) tubulaire étant fermé hermétiquement à ses deux extrémités longitudinales par les deux pincements (18B), les deux pincements (18B) étant aplatis dans un plan longitudinal transversal ;
- au moins un réflecteur (34) qui s'étend longitudinalement;
- deux organes (46) de maintien de la lampe (16) par rapport au réflecteur (34), chaque organe (46) de maintien étant fixé au réflecteur (34) ;chaque tronçon (32) d'extrémité libre de la lampe (16) préalablement équipé de son culot (20) étant monté de manière amovible sur chaque organe (46) de maintien par emboîtement réversible d'une partie du tronçon (32) d'extrémité libre de la lampe avec un logement (54) de forme complémentaire,
**caractérisé en ce que** ledit au moins un réflecteur (34) s'étend à une distance (D) transversale déterminée de l'ampoule (18) tubulaire, **en ce que** les deux organes (46) de maintien sont des organes de maintien en position transversale et **en ce que** l'emboitement réversible est un emboîtement selon une direction orthogonale à la direction longitudinale.

2. Dispositif (14) selon la revendication précédente, **caractérisé en ce que** chaque organe (46) de maintien comporte une fente (54) ouverte transversalement vers l'avant qui est destinée à recevoir par emboîtement transversal la partie complémentaire du tronçon (32) d'extrémité libre de la lampe (16) pour maintenir la lampe (16) en position par rapport au réflecteur (34).

3. Dispositif (14) selon la revendication précédente, **caractérisé en ce qu'** il comporte une butée (66) d'arrêt de la lampe (16) à la distance (D) transversale déterminée du réflecteur (34).

4. Dispositif selon l'une quelconque des revendications 2 ou 3,**caractérisé en ce que** la fente (54) est délimitée par deux doigts (56) élastiquement déformables entre lesquels la partie complémentaire du tronçon (32) d'extrémité de la lampe (16) est reçue avec un jeu vertical de maintien de la lampe en position emboîtée.

5. Dispositif (14) selon l'une quelconque des revendications précédentes, **caractérisé en ce que** chaque organe (46) de maintien est formé par une pièce indépendante qui est fixée au réflecteur (34), notamment par soudage.

6. Dispositif (14) selon l'une quelconque des revendications 1 à 4,**caractérisé en ce que** chaque organe (46) de maintien est réalisé venu de matière avec un élément (38) de support du réflecteur (34).

7. Dispositif (14) selon l'une quelconque des revendications précédentes, **caractérisé en ce que** la partie à emboîter du tronçon (32) d'extrémité de la lampe (16) est formée par le pincement (18B).

8. Dispositif (14) selon l'une quelconque des revendications 1 à 6,**caractérisé en ce que** la partie à emboîter du tronçon (32) d'extrémité de la lampe (16) est formée par le culot (20).

9. Dispositif (14) selon l'une quelconque des revendications précédentes, **caractérisé en ce que** chaque tronçon (32) d'extrémité de la lampe (16) est destiné à être reçu coulissant transversalement avec jeu vertical dans une rainure associée d'un module de chauffage, le dispositif (14) comportant au moins un organe (70) de stabilisation pour empêcher la rotation du dispositif (14) de chauffage autour d'un axe longitudinal par rapport à ladite rainure par contact avec une face de la rainure.

10. Dispositif (14) selon la revendication précédente, **caractérisé en ce que** l'organe (70) de stabilisation comporte une patte de contact avec une face supérieure de la rainure.

11. Dispositif (14) selon l'une quelconque des revendications 9 ou 10,**caractérisé en ce que** l'organe (70) de stabilisation est formé par un élément indépendant qui est fixé avec l'organe de maintien, par exemple par soudage.

12. Dispositif (14) selon la revendication précédente, **caractérisé en ce que** l'élément indépendant comportant l'organe (70) de maintien est muni de la butée (66) d'arrêt de la lampe (16).

## Patentansprüche

1. Vorrichtung (14) zum Heizen, insbesondere zum Heizen von Vorformen aus thermoplastischem Material, das eine einstückige Baugruppe bildet, die dazu bestimmt ist, in einem Gestell (12) zum Tragen mehrerer identischer Vorrichtungen (14) zum Heizen eines Moduls (10) zum Heizen angeordnet zu werden, wobei die Vorrichtung (14) zum Heizen umfasst:
- eine einzelne Lampe (16), die eine röhrenförmige Glühbirne (18) mit Längsachse (A) umfasst, wobei die Lampe (16) einen mittleren röhrenförmigen, hohlen Abschnitt (18A) der Glühbirne (18) und zwei freie Endabschnitte (32) umfasst, von denen jeder eine Endklemme (18B) der Glühbirne (18) und einen Endsockel (20) umfasst, der an der Klemme befestigt ist, wobei der röhrenförmige Abschnitt (18A) an seinen zwei Längsenden durch die zwei Klemmen (18B) hermetisch verschlossen ist, wobei die zwei Klemmen (18B) in einer quergerichteten Längsebene abgeflacht sind;
- mindestens einen Reflektor (34), der sich in Längsrichtung erstreckt;
- zwei Bauteile (46) zum Halten der Lampe (16) in Bezug auf den Reflektor (34), wobei jedes Bauteil (46) zum Halten an dem Reflektor (34) befestigt ist, wobei jeder Abschnitt (32) mit freiem Ende der Lampe (16), der zuvor mit seinem Sockel (20) ausgestattet wurde, auf abnehmbare Weise durch reversible Verschachtelung eines Teils des Abschnitts (32) mit freiem Ende der Lampe mit einem Gehäuse (54) mit komplementärer Form an jedem Bauteil (46) zum Halten montiert wird,
**dadurch gekennzeichnet, dass** sich der mindestens eine Reflektor (34) in einem bestimmten quergerichteten Abstand (D) von der röhrenförmigen Glühbirne (18) erstreckt, und dadurch, dass die zwei Bauteile (46) zum Halten Bauteile zum Halten in quergerichteter Position sind, und dadurch, dass die reversible Verschachtelung eine Verschachtelung gemäß einer zu der Längsrichtung senkrechten Richtung ist.

2. Vorrichtung (14) nach dem vorstehenden Anspruch, **dadurch gekennzeichnet, dass** jedes Bauteil (46) zum Halten einen quer nach vorne offenen Schlitz (54) umfasst, der dazu bestimmt ist, durch Querverschachteln den komplementären Teil des freien Endabschnitts (32) der Lampe (16) aufzunehmen, um die Lampe (16) in Bezug auf den Reflektor (34) in Position zu halten.

3. Vorrichtung (14) nach dem vorstehenden Anspruch, **dadurch gekennzeichnet, dass** sie einen Anschlag (66) zum Stoppen der Lampe (16) in einem bestimmten Querabstand (D) zum Reflektor (34) umfasst.

4. Vorrichtung nach einem der Ansprüche 2 oder 3, **dadurch gekennzeichnet, dass** der Schlitz (54) durch zwei elastisch verformbare Finger (56) begrenzt wird, zwischen denen der komplementäre Teil des Endabschnitts (32) der Lampe (16) mit einem vertikalen Spiel zum Halten der Lampe in verschachtelter Position aufgenommen ist.

5. Vorrichtung (14) nach einem der vorstehenden Ansprüche, **dadurch gekennzeichnet, dass** jedes Bauteil (46) zum Halten durch ein unabhängiges Teil gebildet ist, das an dem Reflektor (34) insbesondere durch Schweißen befestigt ist.

6. Vorrichtung (14) nach einem der Ansprüche 1 bis 4, **dadurch gekennzeichnet, dass** jedes Bauteil (46) zum Halten, kommend aus Material, mit einem Stützelement (38) des Reflektors (34) hergestellt ist.

7. Vorrichtung (14) nach einem der vorstehenden Ansprüche, **dadurch gekennzeichnet, dass** der zu verschachtelnde Teil des Endabschnitts (32) der Lampe (16) durch die Klemme (18B) gebildet wird.

8. Vorrichtung (14) nach einem der Ansprüche 1 bis 6, **dadurch gekennzeichnet, dass** der zu verschachtelnde Teil des Endabschnitts (32) der Lampe (16) durch den Sockel (20) gebildet wird.

9. Vorrichtung (14) nach einem der vorstehenden Ansprüche, **dadurch gekennzeichnet, dass** jeder Endabschnitt (32) der Lampe (16) dazu bestimmt ist, quer gleitend mit vertikalem Spiel in einer zugehörigen Nut eines Heizmoduls aufgenommen zu werden, wobei die Vorrichtung (14) mindestens ein Stabilisierungsbauteil (70) umfasst, um die Drehung der Heizvorrichtung (14) um eine Längsachse in Bezug auf die Nut durch Kontakt mit einer Seite der Nut zu verhindern.

10. Vorrichtung (14) nach dem vorstehenden Anspruch, **dadurch gekennzeichnet, dass** das Stabilisierungsbauteil (70) eine Lasche zum Kontakt mit einer Oberseite der Nut umfasst.

11. Vorrichtung (14) nach einem der Ansprüche 9 oder 10, **dadurch gekennzeichnet, dass** das Stabilisierungsbauteil (70) durch ein unabhängiges Element gebildet wird, das mit dem Bauteil zum Halten zum Beispiel durch Schweißen befestigt ist.

12. Vorrichtung (14) nach dem vorstehenden Anspruch, **dadurch gekennzeichnet, dass** das unabhängige Element, umfassend das Bauteil zum Halten (70), mit dem Anschlag (66) zum Stoppen der Lampe (16) versehen ist.

## Claims

1. Heating device (14), in particular for heating thermoplastic preforms, forming an integral assembly to be arranged in a rack (12) for supporting a plurality of identical heating devices (14) of a heating module (10), the heating device (14) comprising:
- a single lamp (16) comprising a tubular bulb (18) with a longitudinal axis (A), the lamp (16) comprising a hollow tubular central section (18A) of the bulb (18) and two free end sections (32) each of which comprises an end pinch (18B) of the bulb (18) and an end cap (20) which is attached to the pinch, the tubular section (18A) being hermetically sealed at its two longitudinal ends by the two pinches (18B), the two pinches (18B) being flattened in a transverse longitudinal plane;
- at least one reflector (34) which extends longitudinally;
- two members (46) for holding the lamp (16) with respect to the reflector (34), each holding member (46) being attached to the reflector (34); each free end section (32) of the lamp (16) previously fitted with its end cap (20) being mounted removably on each holding member (46) by reversibly pushing part of the free end section (32) of the lamp into a housing (54) of complementary shape, **characterized in that** the said at least one reflector (34) extends at a determined transverse distance (D) away from the tubular bulb (18), **in that** the two holding members (46) are members that perform holding in a transverse position, and **in that** the reversible pushing-in is a pushing-in in a direction orthogonal to the longitudinal direction.

2. Device (14) according to the preceding claim, **characterized in that** each holding member (46) comprises a slot (54) which is open transversely towards the front and which is intended to accept, by transverse pushing-in, the complementary part of the free end section (32) of the lamp (16) so as to hold the lamp (16) in position with respect to the reflector (34).

3. Device (14) according to the preceding claim, **characterized in that** it comprises an end stop (66) stopping the lamp (16) at the determined transverse distance (D) from the reflector (34).

4. Device according to either one of Claims 2 or 3, **characterized in that** the slot (54) is delimited by two elastically deformable fingers (56) between which the complementary part of the end section (32) of the lamp (16) is received with a vertical clearance for holding the lamp in the pushed-in position.

5. Device (14) according to any one of the preceding claims, **characterized in that** each holding member (46) is formed of an independent component which is attached to the reflector (34), in particular by welding.

6. Device (14) according to any one of Claims 1 to 4, **characterized in that** each holding member (46) is formed as one piece with a support element (38) supporting the reflector (34).

7. Device (14) according to any one of the preceding claims, **characterized in that** the part of the end section (32) of the lamp (16) that is to be pushed in is formed by the pinch (18B).

8. Device (14) according to any one of Claims 1 to 6, **characterized in that** the part of the end section (32) of the lamp (16) that is to be pushed in is formed by the end cap (20).

9. Device (14) according to any one of the preceding claims, **characterized in that** each end section (32) of the lamp (16) is intended to be received sliding transversely with vertical clearance in an associated groove of a heating module, the device (14) comprising at least one stabilizing member (70) for preventing the heating device (14) from rotating about a longitudinal axis with respect to the said groove by contact with a face of the groove.

10. Device (14) according to the preceding claim, **characterized in that** the stabilizing member (70) comprises a tab for contact with an upper face of the groove.

11. Device (14) according to either one of Claims 9 and 10, **characterized in that** the stabilizing member (70) is formed of an independent element which is attached to the holding member, for example by welding.

12. Device (14) according to the preceding claim, **characterized in that** the independent element comprising the holding member (70) is equipped with the end stop (66) for the lamp (16).
